# EUROPÄISCHE PATENTSCHRIFT

(11) **EP 3 260 340 B1**
(45) Veröffentlichungstag und Bekanntmachung des Hinweises auf die Patenterteilung: **04.09.2019**
(21) Anmeldenummer: 17171518.8
(22) Anmeldetag: 17.05.2017
(51) Int. Cl.: B60T 17/08, B61H 13/00, B60T 17/22

(54) **FESTSTELLBREMSE FÜR EIN FAHRWERK EINES SCHIENENFAHRZEUGS**
PARKING BRAKE FOR A CHASSIS OF A RAIL VEHICLE
FREIN DE SERVICE POUR UN TRAIN DE VÉHICULE SUR RAILS

(30) Priorität: 25.05.2016 WO PCT/EP2016/061820
(43) Veröffentlichungstag der Anmeldung: 27.12.2017
(73) Patentinhaber: Siemens Mobility GmbH, 1210 Wien (AT)
(72) Erfinder: Gritsch, Alexander, 8430 Leitring (AT)
(74) Vertreter: Deffner, Rolf

(56) Entgegenhaltungen:
- EP-A1- 0 999 108
- EP-A2- 0 699 846
- WO-A1-03/082648
- WO-A1-03/082650
- DE-A1-102005 055 674
- US-A1- 2003 094 851

## Beschreibung

Die Erfindung betrifft eine Feststellbremse für ein Fahrwerk eines Schienenfahrzeugs, wobei zumindest eine Krafterzeugungseinheit, zumindest eine Kraftübersetzungseinheit, zumindest ein Reibelement, zumindest ein Reibpartner sowie zumindest eine Notlöseeinrichtung mit zumindest einem ersten Kraftübertragungsglied angeordnet sind. WO 03/082650 offenbart Komponenten einer Fahrzeugbremse, welche einen Verschleißnachsteller mit elektrischer Betätigung aufweisen.

In Fahrwerken für Schienenfahrzeuge werden häufig pneumatische Bremsen eingesetzt. Diese umfassen in bekannter Weise Krafterzeugungseinheiten, die z.B. Betriebs- und Feststellbremszylinder, Federn etc. aufweisen können. Bekannte Feststellbremszylinder drücken ein Reibelement (z.B. einen Bremsbelag, ein Bremsbelagpaar oder einen Bremsklotz etc., die auf Haltern angeordnet sein können) über eine, mit dem Reibelement und der Krafterzeugungseinheit verbundene mechanische Kraftübersetzungseinheit (z.B. ein Gestänge) an einen Reibpartner (z.B. eine Bremsscheibe oder ein Rad etc.). Dieser Vorgang wird eingeleitet, wenn Druckluft, die auf eine in dem Feststellbremszylinder angeordnete Feder wirkt und diese vorspannt, aus einer Luftkammer des Feststellbremszylinders entweicht, d.h. der Druck im Feststellbremszylinder reduziert wird, aufgrund des verringerten Drucks die Vorspannung der Feder abnimmt und die sich entspannende Feder einen Kolben innerhalb des Feststellbremszylinders sowie die Kraftübersetzungseinheit bewegt. Aufgrund der Bewegung der Kraftübersetzungseinheit wird das Reibelement an den Reibpartner angelegt.

Auf diese Weise wird das Schienenfahrzeug vor Abrollen und Abrutschen auf einem Gleis gesichert.

Wird der Druck in dem Feststellbremszylinder erhöht, so werden der Kolben in eine Gegenrichtung bewegt, die Feder vorgespannt und das Reibelement von dem Reibpartner gelöst. Dadurch wird die Feststellbremswirkung reduziert, d.h. die Feststellbremse wird gelöst.
Eine Notlöseeinrichtung wird eingesetzt, um einen Lösevorgang auch bei Fehlfunktionen der Feststellbremse, d.h. wenn sich beispielsweise die Luftkammer des Feststellbremszylinders nicht ordnungsgemäß mit Druckluft füllt (z.B. aufgrund von Leckagen in einer Druckluftleitung), einleiten zu können.
Die Notlöseeinrichtung wird in bekannter Weise z.B. manuell über ein Kraftübertragungsglied (z.B. einen Bowdenzug) in einem Außenbereich des Schienenfahrzeugs betätigt. Das Kraftübertragungsglied ist beispielsweise mit dem Feststellbremszylinder verbunden, übt bei Betätigung eine Zugkraft gegen die Kraft der Feder auf den Kolben aus und bewegt diesen sowie die Kraftübersetzungseinheit in einer Weise, dass das Reibelement von dem Reibpartner gelöst wird, d.h. die Feststellbremswirkung aufgehoben wird.

Die Betätigung des Kraftübertragungsglieds in dem Außenbereich des Schienenfahrzeugs stellt für einen Bediener ein Sicherheitsrisiko dar, da beispielsweise andere, den Bediener gefährdende Schienenfahrzeuge auf benachbarten Gleisen verkehren können oder Stromschienen im Gleisbereich angeordnet sein können, die, um Stromschläge zu vermeiden, nicht berührt werden dürfen etc.

Weiterhin kann aufgrund der baulichen Situation um das Schienenfahrzeug die Notlöseeinrichtung unzugänglich sein. Dem Stand der Technik nach bekannt sind Lösungen, die eine Verlegung von zwei Kraftübertragungsgliedern umfassen, wobei ein Kraftübertragungsglied auf einer linken Seite des Schienenfahrzeugs zugänglich ist und ein weiteres Kraftübertragungsglied auf einer rechten Seite.
Dieser Ansatz führt zu keiner Lösung, wenn die linke und die rechte Seite des Schienenfahrzeugs unzugänglich sind.

Bekannt sind darüber hinaus verlängerte Griffstücke für Kraftübertragungsglieder, mit denen beispielsweise aus dem Bereich einer geöffneten Tür des Schienenfahrzeugs heraus ein Ende eines Kraftübertragungsglieds erreicht werden und so die Notlöseeinrichtung betätigt werden kann, wenn der Außenbereich des Schienenfahrzeugs unzugänglich ist.
Diese Lösung zeichnet sich in der Bedienung durch eine geringe Ergonomie aus.

Ferner führt eine bekannte Verlegung des Kraftübertragungsglieds von einer auf dem Fahrwerk angeordneten Feststellbremse in den Innenraum des Schienenfahrzeugs zu einem hohen Aufwand, da Relativbewegungen zwischen dem Fahrwerk und einem Wagenkasten bei Auslegung und Führung des Kraftübertragungsglieds berücksichtigt werden müssen.

Bekannt sind weiterhin unbemannte Schienenfahrzeuge in führerlosen Transportsystemen. Bei Erfordernis einer manuellen Notlösung einer Feststellbremse mit einer Notlöseeinrichtung, die nur in einem Nahbereich des Schienenfahrzeugs betätigbar ist, muss beispielsweise ein Bediener einen Leitstand verlassen und das Schienenfahrzeug aufsuchen.
Dadurch können ein großer zeitlicher Aufwand und Fahrplanabweichungen in dem führerlosen Transportsystem verursacht werden.

Nach dem Stand der Technik beschreibt beispielsweise die EP 2 099 666 B1 eine Feststellbremsvorrichtung mit einer Notlöseeinrichtung und einer Notlösesteuereinrichtung für ein pneumatisches Bremssystem eines Nutzfahrzeugs, wobei die Notlöseeinrichtung elektrisch, pneumatisch oder mechanisch steuerbar ist.
Ein Aktuator für eine Betätigung der Notlöseeinrichtung wird in der EP 2 099 666 B1 nicht offenbart.

Weiterhin offenbart die EP 1 311 420 B1 eine Notlöseeinrichtung für Federspeicherbremsen mit Anzeigevorrichtungen.
Die Notlöseeinrichtung wird von Hand betätigt, ein Aktuator für eine mechanisierte Betätigung der Notlöseeinrichtung wird in der EP 1 311 420 B1 nicht gezeigt.

Darüber hinaus ist in der WO 03/082650 A1 eine Bremszuspanneinrichtung mit elektrisch betätigtem Verschleißnachsteller beschrieben. Als Notlöseeinrichtung ist ein Drehantrieb vorgesehen, der über einen Bowdenzug elektrisch betätigt werden kann.

Die WO 03/082648 A1 zeigt eine Bremszuspanneinrichtung mit elektrisch betätigter Not- und Hilfslöseeinrichtung, wobei eine gemeinsame Antriebseinheit für Not- und Hilfslösevorgänge vorgesehen ist.

Die EP 0 699 846 A2 offenbart ein Fahrzeug-Bremsgestänge mit einem automatischen Verschleißnachsteller, der mit einem Drehantrieb gekoppelt ist.

In der US 2003/0094851 A1 ist eine Federspeicherbremse mit einem Notlösegerät beschrieben, das über einen Verschlussbolzen und ein Sperrstück verriegelbar ist.

Eine elektromechanisch betätigte Bremse mit Notlösevorrichtung ist in der DE 10 2005 055 674 A1 offenbart. Es ist ein Hebelmechanismus vorgesehen, auf den ein elektrisch betätigtes Halteglied wirkt. In einem stromlosen Zustand des Halteglieds wird der Hebelmechanismus zum Lösen der Bremse freigegeben.

Die EP 0 999 108 A1 zeigt ein Bremssystem mit einer Schalteinrichtung und einem Aktuator, der auf eine Bremsvorrichtung wirkt. Über eine erste Schaltstellung wird die Bremsvorrichtung betätigt und über eine zweite Schaltstellung wird die Bremsvorrichtung gelöst.

Der Erfindung liegt daher die Aufgabe zugrunde, eine gegenüber dem Stand der Technik verbesserte Feststellbremse anzugeben.

Erfindungsgemäß wird diese Aufgabe gelöst mit einer Feststellbremse der eingangs genannten Art, bei der zumindest mit dem ersten Kraftübertragungsglied der zumindest einen Notlöseeinrichtung ein elektrischer Aktuator verbunden ist.

Durch diese Maßnahme werden eine Fernaktivierung der Notlöseeinrichtung (z.B. über Kabel bzw. Signalleitungen von einem Führerstand des Schienenfahrzeugs oder über Funkwellen von einem Leitstand aus) sowie mechanisierte Notlösevorgänge ermöglicht.
Folglich wird die Sicherheit erhöht, da für eine Aktivierung der Notlöseeinrichtung keine Anwesenheit eines Bedieners im Außenbereich des Schienenfahrzeugs erforderlich ist. Weiterhin werden durch dezentrale Notlösevorgänge Stillstandzeiten des Schienenfahrzeugs gesenkt und Verfügbarkeiten erhöht.
Ferner ergibt sich bei der Verlegung des ersten Kraftübertragungsglieds (z.B. Bowdenzug) eine günstige Flexibilität, weil dessen Betätigungsende aufgrund des mittels des elektrischen Aktuators mechanisierten Notlösevorgangs nicht zwingend von Hand erreicht werden muss. Das erste Kraftübertragungsglied und der elektrische Aktuator können an in Bezug auf die Bauraumverhältnisse in dem Fahrwerk oder dem Schienenfahrzeug günstigen Stellen angeordnet werden.
Hinsichtlich der Anordnung des ersten Kraftübertragungsglieds und des elektrischen Aktuators in dem Fahrwerk bzw. in dem Schienenfahrzeug wird darüber hinaus eine günstige Flexibilität bei der Berücksichtigung von Kundenanforderungen erzielt.

Erfindungsgemäß kann die Notlöseeinrichtung auch mehr als ein erstes Kraftübertragungsglied aufweisen, an deren Betätigungsenden je ein elektrischer Aktuator angeordnet werden kann.
Dadurch wird z.B. bei Fehlfunktionen oder Ausfällen von Teilen der Notlöseeinrichtung eine vorteilhafte Redundanz erzielt und die Sicherheit sowie die Verfügbarkeit erhöht.

Es ist günstig, wenn das erste Kraftübertragungsglied lösbar mit dem elektrischen Aktuator verbunden ist.
Durch diese Maßnahme kann der elektrische Aktuator z.B. zu Wartungszwecken rasch montiert und demontiert werden. Weiterhin ist ein Ersatz des elektrischen Aktuators durch eine in Bezug auf die Verbindung mit dem ersten Kraftübertragungsglied schnittstellengleiche Komponente, z.B. durch einen schnittstellengleichen Handgriff möglich. Dadurch wird eine vorteilhafte Flexibilität in Bezug auf Kundenanforderungen und Änderungswünsche etc. erzielt.

Eine vorteilhafte Lösung erhält man, wenn die Notlöseeinrichtung zumindest ein zweites
Kraftübertragungsglied aufweist, das mit einem Handgriff verbunden ist.
Durch die Möglichkeit einer manuellen Betätigung über den Handgriff wird z.B. bei Fehlfunktionen und Ausfällen des elektrischen Aktuators eine günstige Redundanz bewirkt. Nachfolgend wird die Erfindung anhand von Ausführungsbeispielen näher erläutert.

Es zeigen beispielhaft:
- Fig. 1:: Eine schematische, nicht maßstäbliche Skizze einer ersten beispielhaften Ausführung einer erfindungsgemäßen Feststellbremse, wobei eine erfindungsgemäße Notlöseeinrichtung mit einem ersten Kraftübertragungsglied sowie einem elektrischen Aktuator dargestellt ist,
- Fig. 2:: Eine schematische, nicht maßstäbliche Skizze einer zweiten beispielhaften Ausführung einer erfindungsgemäßen Feststellbremse, wobei eine erfindungsgemäßen Notlöseeinrichtung mit einem ersten Kraftübertragungsglied und einem elektrischen Aktuator sowie mit einem zweiten Kraftübertragungsglied und einem Handgriff dargestellt ist, und
- Fig. 3:: Einen Schnitt durch eine beispielhafte Ausführung eines als Aufriss gezeigten erfindungsgemäßen elektrischen Aktuators.

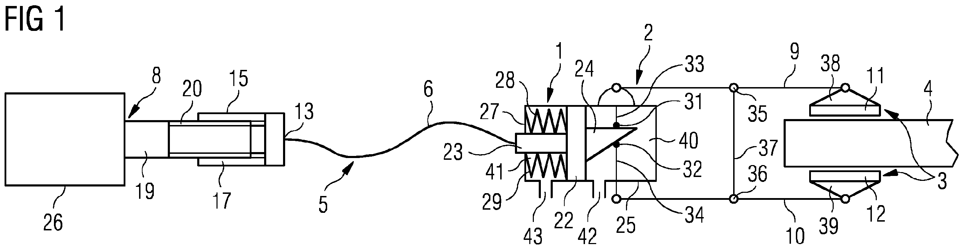

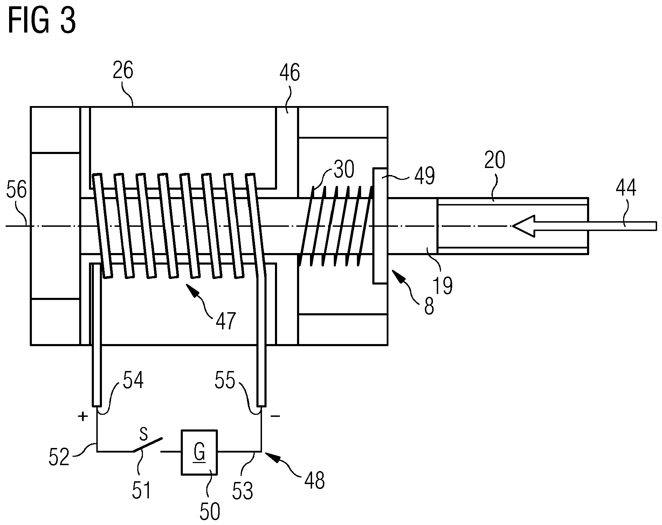

Eine in Fig. 1 schematisch dargestellte, erste Ausführungsvariante einer erfindungsgemäßen Feststellbremse umfasst eine pneumatische Krafterzeugungseinheit 1, eine als Gestänge mit einem ersten Bremshebel 9 und einem zweiten Bremshebel 10 ausgebildete Kraftübersetzungseinheit 2, ein Reibelement 3, das einen ersten Bremsbelag 11 und einen zweiten Bremsbelag 12 aufweist, einen als Bremsscheibe ausgeführten Reibpartner 4 sowie eine Notlöseeinrichtung 5. Die Notlöseeinrichtung 5 umfasst ein erstes Kraftübertragungsglied 6, das als Bowdenzug ausgebildet ist sowie einen als Hubmagnet ausgeführten elektrischen Aktuator 8, dessen Spannungsversorgungseinheit 48 und dessen konstruktiver Aufbau in Fig. 3 gezeigt werden.
Über ein in Fig. 1 links dargestelltes erstes Betätigungsende 13 ist das erste Kraftübertragungsglied 6 mit der Krafterzeugungseinheit 1 verbunden. Das erste Betätigungsende 13 weist ein zylindrisches erstes Endstück 15 auf, auf dessen innerer Mantelfläche ein erstes Innengewinde 17 ausgebildet ist.
Die Notlöseeinrichtung 5 ist über nicht gezeigte Befestigungsmittel auf einem nicht dargestellten Träger eines ebenfalls nicht gezeigten Fahrwerks für ein Schienenfahrzeug angeordnet.
Der elektrische Aktuator 8 umfasst eine zylindrische Zugstange 19, auf deren in Fig. 1 rechts dargestelltem Ende ein erstes Außengewinde 20 ausgebildet ist.
Über das erste Innengewinde 17 und das erste Außengewinde 20 sind das erste Endstück 15 des ersten Kraftübertragungsglieds 6 und die Zugstange 19 des elektrischen Aktuators 8 miteinander verschraubt, d.h. kraftschlüssig miteinander verbunden. Dabei handelt es sich um eine vorteilhafte Lösung. Erfindungsgemäß sind jedoch auch andere Ausführungen vorstellbar, wie z.B. formschlüssige Verbindungen.
Weiterhin ist es auch denkbar, dass das erste Außengewinde 20 auf dem ersten Endstück 15 und das erste Innengewinde 17 auf der Zugstange 19 angeordnet ist.

Die Feststellbremse ist über nicht dargestellte Schraubenverbindungen mit dem Fahrwerk verbunden. Der Reibpartner 4 ist auf einem nicht dargestellten Radsatz des Fahrwerks gelagert.
Die Krafterzeugungseinheit 1 ist als pneumatischer Zylinder ausgeführt und weist einen Kolben 22, eine mit diesem verbundene Kolbenstange 23 sowie einen auf diesem gelagerten Keil 24 auf.
Zwischen dem Kolben 22 und einer Rückwand 27 eines ersten Gehäuses 25 der Krafterzeugungseinheit 1 sind eine erste Feder 28 und eine zweite Feder 29 angeordnet.
Zwischen der ersten Feder 28 und der zweiten Feder 29 verläuft die Kolbenstange 23 aus der Krafterzeugungseinheit 1 über eine Öffnung nach außen. Die Öffnung ist gegen einen unbeabsichtigten Druckausgleich sowie gegen ein Eindringen von Substanzen in die Krafterzeugungseinheit 1 abgedichtet. Mit dem in Fig. 1 links dargestellten Ende der Kolbenstange 23 ist das erste Kraftübertragungsglied 6 verbunden.

Der Keil 24 berührt eine erste Walze 31, die über einen ersten Steg 33 mit dem ersten Gehäuse 25 der Krafterzeugungseinheit 1 verbunden ist und eine zweite Walze 32, die über einen zweiten Steg 34 gelenkig mit dem zweiten Bremshebel 10 verbunden ist.
Der zweite Steg 34 wird über eine Öffnung aus der Krafterzeugungseinheit 1 nach außen geführt. Die Öffnung ist gegen einen unbeabsichtigten Druckausgleich sowie gegen ein Eindringen von Substanzen in die Krafterzeugungseinheit 1 abgedichtet.

Der erste Bremshebel 9 ist über sein in Fig. 1 links dargestelltes Ende mit der Krafterzeugungseinheit 1 verbunden, in einem mittleren Bereich über ein erstes Drehgelenk 35 auf einer Bremsbrücke 37 gelagert und über sein in Fig. 1 rechts dargestelltes Ende mit einem ersten Halter 38 verbunden.

Der zweite Bremshebel 10 ist über sein in Fig. 1 links dargestelltes Ende mit dem zweiten Steg 34 verbunden, in einem mittleren Bereich über ein zweites Drehgelenk 36 auf der Bremsbrücke 37 gelagert und über sein in Fig. 1 rechts dargestelltes Ende mit einem zweiten Halter 39 verbunden.

Die Feststellbremse ist gelöst, wenn eine erste Luftkammer 40 der Krafterzeugungseinheit 1 mit Druckluft gefüllt ist und ein bestimmtes Druckniveau herrscht. Aufgrund des Drucks wird eine Kraft auf den Kolben 22 erzeugt, welche diesen in einer rückwärtigen Stellung in der Nähe der Rückwand 27 hält und die erste Feder 28 und die zweite Feder 29 komprimiert. In diesem Zustand sind der erste Bremshebel 9 und der zweite Bremshebel 10 in einer Weise ausgelenkt, dass der erste Bremsbelag 11 und der zweite Bremsbelag 12 den Reibpartner 4 nicht berühren.

Eine Feststellbremsung wird eingeleitet, wenn Druckluft über einen ersten Luftanschluss 42 aus der ersten Luftkammer 40 strömt, folglich die Kompression der ersten Feder 28 und der zweiten Feder 29 abnimmt und sich der Kolben 22 und der Keil 24 von der Rückwand 27 weg bewegen, d.h. nach rechts in Bezug auf die Orientierung der Krafterzeugungseinheit 1 in Fig. 1. Über den Keil 24 und die zweite Walze 32 erfolgt eine Kraftübertragung auf den zweiten Bremshebel 10.
Der zweite Bremshebel 10 rotiert um das zweite Drehgelenk 36 und drückt den zweiten Bremsbelag 12 auf dem zweiten Halter 39 an den Reibpartner 4. Aufgrund dieser Bewegung rotiert der erste Bremshebel 9 um das erste Drehgelenk 35 und drückt den ersten Bremsbelag 11 auf dem ersten Halter 38 an den Reibpartner 4.
Dadurch wird eine Feststellbremswirkung auf das Fahrwerk bzw. das Schienenfahrzeug erzeugt und dessen Abrollen und Abrutschen auf einem Gleis verhindert.
Der erste Luftanschluss 42 ist über nicht dargestellte Druckluftleitungen, Ventile etc. mit einem nicht dargestellten Druckluftsystem des Fahrwerks bzw. des Schienenfahrzeugs verbunden.

Die Notlöseeinrichtung 5 wird eingesetzt, um einen Lösevorgang der Feststellbremse auch bei einer Fehlfunktion, d.h. wenn sich beispielsweise die erste Luftkammer 40 der Krafterzeugungseinheit 1 nicht ordnungsgemäß mit Druckluft füllt (z.B. aufgrund von Leckagen in einer Druckluftleitung), einleiten zu können.
Die Notlöseeinrichtung 5 wird über den elektrischen Aktuator 8 betätigt. Dieser bewegt die Zugstange 19 und das mit ihr verbundene erste Kraftübertragungsglied 6 aufgrund einer in Fig. 3 dargestellten, erzeugten Zugkraft 44. Das erste Kraftübertragungsglied 6 bewegt die Kolbenstange 23 in einer Weise, dass der Kolben 22 in Richtung der Rückwand 27 gezogen wird und dabei die erste Feder 28 und die zweite Feder 29 komprimiert werden. Zwischen der Kolbenstange 23 und dem ersten Gehäuse 25 sind nicht dargestellte Mittel für eine Arretierung des Kolbens 22 in der Nähe der Rückwand 27 angeordnet, welche die Feststellbremse nach einer Deaktivierung des elektrischen Aktuators 8 und einer Reduktion der Zugkraft 44 in einer gelösten Stellung halten. Über einen zweiten Luftanschluss 43 kann Druckluft in eine zweite Luftkammer 41 der Krafterzeugungseinheit 1 eingeleitet und ein Druckniveau erzeugt werden, mit dem die Arretierung bei Beendigung der Fehlfunktion über eine aufgrund des Drucks erzeugte Kraft auf den Kolben 22 wieder gelöst und eine Feststellbremsung wieder ermöglicht werden kann.
Dabei handelt es sich um eine günstige Lösung. Erfindungsgemäß ist es jedoch auch möglich, dass keine Mittel für die Arretierung des Kolbens 22 vorgesehen sind und der Kolben 22 während der Fehlfunktion aufgrund der von dem elektrischen Aktuator 8 erzeugten Zugkraft 44 in der Nähe der Rückwand 27 gehalten wird, d.h. der elektrische Aktuator 8 während der Fehlfunktion dauerhaft aktiv bleibt und die Zugkraft 44 dauerhaft aufbringt.

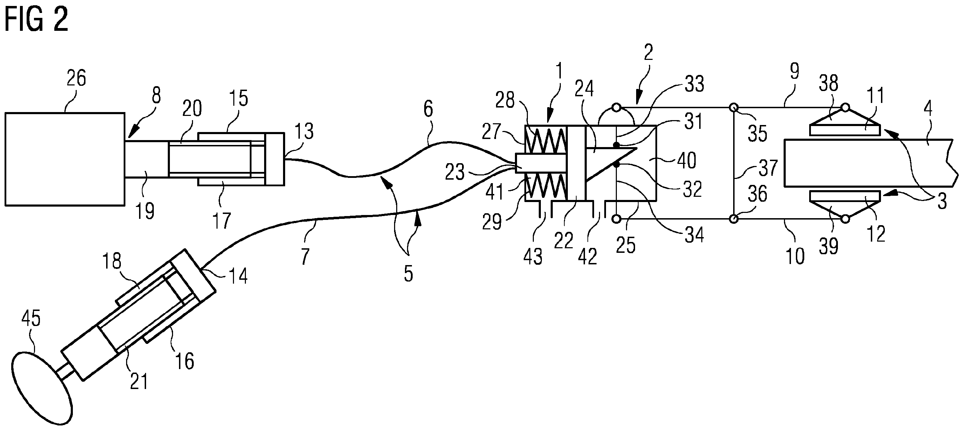

Der zweite Luftanschluss 43 ist über nicht dargestellte Druckluftleitungen, Ventile etc. mit einem nicht dargestellten Druckluftsystem des Fahrwerks bzw. des Schienenfahrzeugs verbunden.
Im Unterschied zu Fig. 1 zeigt Fig. 2 eine Ausführung, bei der eine Notlöseeinrichtung 5 ein erstes Kraftübertragungsglied 6 mit einem elektrischen Aktuator 8 und ein zweites Kraftübertragungsglied 7 mit einem Handgriff 45 aufweist.
Ein zweites Betätigungsende 14 des zweiten Kraftübertragungsglieds 7 weist ein zylindrisches zweites Endstück 16 auf, auf dessen innerer Mantelfläche ein zweites Innengewinde 18 ausgebildet ist.
Der Handgriff 45 weist auf seinem in Fig. 2 rechts dargestellten Ende ein zweites Außengewinde 21 auf.
Über das zweite Innengewinde 18 und das zweite Außengewinde 21 sind das zweite Endstück 16 des zweiten Kraftübertragungsglieds 7 und der Handgriff 45 miteinander verschraubt, d.h. kraftschlüssig miteinander verbunden. Dabei handelt es sich um eine vorteilhafte Lösung. Erfindungsgemäß sind jedoch auch andere Ausführungen vorstellbar, wie z.B. formschlüssige Verbindungen.
Weiterhin ist es auch denkbar, dass das zweite Außengewinde 21 auf dem zweiten Endstück 16 und das zweite Innengewinde 18 auf dem Handgriff 45 angeordnet ist.

Das erste Kraftübertragungsglied 6 und das zweite Kraftübertragungsglied 7 sind an deren in Fig. 2 rechts dargestellten Enden mit einer Kolbenstange 23 einer Krafterzeugungseinheit 1 verbunden.
Die Krafterzeugungseinheit 1 ist nach den in Fig. 1 dargestellten Prinzipien ausgebildet.

Eine Betätigung der Notlöseeinrichtung 5 kann über den elektrischen Aktuator 8 oder über den Handgriff 45 erfolgen. Beide Betätigungsvarianten führen über eine Auslenkung der Kolbenstange 23 und eines Kolbens 22 gegen die Wirkung einer ersten Feder 28 und einer zweiten Feder 29 zu einer Auslenkung einer Kraftübersetzungseinheit 2. Über die Auslenkung der Kraftübersetzungseinheit 2 wird ein Reibelement 3 von einem Reibpartner 4 gelöst.
Das erste Kraftübertragungsglied 6 und das zweite Kraftübertragungsglied 7 sind in einer Weise verlegt, dass beispielsweise eine Betätigung des ersten Kraftübertragungsglieds 6 und eine damit einhergehende Bewegung des zweiten Kraftübertragungsglieds 7 einander nicht stören, keine störenden Auswirkungen auf die Anordnung des elektrischen Aktuators 8 und des Handgriffs 45 verursachen sowie mit der Bauraumsituation in einem Fahrwerk bzw. einem Schienenfahrzeug verträglich sind.
Im Übrigen entspricht das in Fig. 2 gezeigte Prinzip jener Ausführungsvariante, die in Fig. 1 dargestellt ist.

Fig. 3 zeigt einen elektrischen Aktuator 8, der als Hubmagnet ausgeführt ist und eine Zugstange 19, eine um einen Eisenkern 46 gewickelte Spule 47 mit einer Spannungsversorgungseinheit 48, eine dritte Feder 30 sowie ein zweites Gehäuse 26 umfasst.
Die dritte Feder 30 ist zwischen einem Flansch 49 und dem Eisenkern 46 vorgesehen.
Der Eisenkern 46, die dritte Feder 30 sowie der Flansch 49 sind innerhalb des zweiten Gehäuses 26 angeordnet.
Die Zugstange 19 wird teilweise innerhalb und teilweise außerhalb des zweiten Gehäuses 26 geführt. Sie verläuft in einem in Fig. 3 rechts dargestellten Bereich aus dem zweiten Gehäuse 26 heraus. Der Bereich zwischen der Zugstange 19 und dem zweiten Gehäuse 26 ist abgedichtet, um ein Eindringen von Substanzen in den elektrischen Aktuator 8 zu verhindern.
Auf der Zugstange 19 ist, in Fig. 3 rechts und außerhalb des zweiten Gehäuses 26 dargestellt, ein erstes Außengewinde 20 ausgebildet, über das der elektrische Aktuator 8 mit einem ersten Endstück 15 eines ersten Kraftübertragungsglieds 6 einer Notlöseeinrichtung 5 einer Feststellbremse entsprechend den Darstellungen in Fig. 1 und Fig. 2 verbunden werden kann. Die Spule 47 verläuft in einem in Fig. 3 unten dargestellten Bereich aus dem zweiten Gehäuse 26 heraus und ist außerhalb des zweiten Gehäuses 26 mit der Spannungsversorgungseinheit 48 verbunden. Der außerhalb des zweiten Gehäuses 26 angeordnete Teil der Spule 47 und die ebenfalls außerhalb des zweiten Gehäuses 26 vorgesehene Spannungsversorgungseinheit 48 werden von einem nicht dargestellten dritten Gehäuse ummantelt und sind daher gegenüber Umgebungseinflüssen geschützt.
Weiterhin ist das zweite Gehäuse 26 durch das dritte Gehäuse vor einem Eindringen von Substanzen geschützt.

Für eine Betätigung des elektrischen Aktuators 8 von einem Führerstand eines Schienenfahrzeugs aus weist das zweite Gehäuse 26 nicht dargestellte Anschlüsse für Kabel bzw. Signalleitungen, die in den Führerstand geführt werden, auf. Für eine Fernaktivierung des elektrischen Aktuators 8 von einem Leitstand aus ist auf dem zweiten Gehäuse 26 eine nicht gezeigte Sende- und Empfangseinheit für Funkwellen angeordnet.
Weiterhin ist in dem elektrischen Aktuator 8 eine nicht dargestellte Steuer- bzw. Regeleinrichtung für eine Verarbeitung von über besagte Kabel bzw. Signalleitungen sowie Funkwellen übertragenen Signalen und für eine Ansteuerung der Spannungsversorgungseinheit 48 vorgesehen. Die Steuer- bzw. Regeleinrichtung ist über nicht gezeigte Leitungswege mit besagten Anschlüssen für Kabel bzw. Signalleitungen, mit der Sende- und Empfangseinheit für Funkwellen sowie mit der Spannungsversorgungseinheit 48 verbunden.

Die Spannungsversorgungseinheit 48 umfasst einen Gleichstromgenerator 50 und einen Schließer 51, die über einen ersten Leiter 52 mit einer Pluspol-Anschlussklemme 54 und über einen zweiten Leiter 53 mit einer Minuspol-Anschlussklemme 55 der Spule 47 verbunden sind.

Liegt eine Spannung an der Spule 47 an, wird über ein folglich entstehendes Magnetfeld eine Zugkraft 44 erzeugt. Aufgrund der Zugkraft 44 wird die Zugstange 19 entlang einer Längsachse 56 gegen die Wirkung der dritten Feder 30, die um die Zugstange 19 angeordnet ist, bewegt. Die dritte Feder 30 wird aufgrund des Bewegungsvorgangs der Zugstange 19 komprimiert.
Bei Ausschalten der Spannung werden die Zugkraft 44 abgebaut, die dritte Feder 30 entspannt und die Zugstange 19 wieder in eine Ausgangsposition zurückgeführt.

Die Bewegung der Zugstange 19 führt über die Verbindung der Zugstange 19 mit dem ersten Endstück 15 des ersten Kraftübertragungsglieds 6 zu einer Bewegung des ersten Kraftübertragungsglieds 6 und somit zu einer Notlösung der Feststellbremse entsprechend den im Zusammenhang mit Fig. 1 und Fig. 2 beschriebenen Prinzipien.

### Liste der Bezeichnungen

- 1: Krafterzeugungseinheit
- 2: Kraftübersetzungseinheit
- 3: Reibelement
- 4: Reibpartner
- 5: Notlöseeinrichtung
- 6: Erstes Kraftübertragungsglied
- 7: Zweites Kraftübertragungsglied
- 8: Elektrischer Aktuator
- 9: Erster Bremshebel
- 10: Zweiter Bremshebel
- 11: Erster Bremsbelag
- 12: Zweiter Bremsbelag
- 13: Erstes Betätigungsende
- 14: Zweites Betätigungsende
- 15: Erstes Endstück
- 16: Zweites Endstück
- 17: Erstes Innengewinde
- 18: Zweites Innengewinde
- 19: Zugstange
- 20: Erstes Außengewinde
- 21: Zweites Außengewinde
- 22: Kolben
- 23: Kolbenstange
- 24: Keil
- 25: Erstes Gehäuse
- 26: Zweites Gehäuse
- 27: Rückwand
- 28: Erste Feder
- 29: Zweite Feder
- 30: Dritte Feder
- 31: Erste Walze
- 32: Zweite Walze
- 33: Erster Steg
- 34: Zweiter Steg
- 35: Erstes Drehgelenk
- 36: Zweites Drehgelenk
- 37: Bremsbrücke
- 38: Erster Halter
- 39: Zweiter Halter
- 40: Erste Luftkammer
- 41: Zweite Luftkammer
- 42: Erster Luftanschluss
- 43: Zweiter Luftanschluss
- 44: Zugkraft
- 45: Handgriff
- 46: Eisenkern
- 47: Spule
- 48: Spannungsversorgungseinheit
- 49: Flansch
- 50: Gleichstromgenerator
- 51: Schließer
- 52: Erster Leiter
- 53: Zweiter Leiter
- 54: Pluspol-Anschlussklemme
- 55: Minuspol-Anschlussklemme
- 56: Längsachse

## Patentansprüche

1. Feststellbremse für ein Fahrwerk eines Schienenfahrzeugs, wobei die Feststellbremse zumindest eine Krafterzeugungseinheit, zumindest eine Kraftübersetzungseinheit, zumindest ein Reibelement, zumindest einen Reibpartner sowie zumindest eine Notlöseeinrichtung mit zumindest einem ersten Kraftübertragungsglied umfasst, **dadurch gekennzeichnet, dass** zumindest mit dem ersten Kraftübertragungsglied (6) der zumindest einen Notlöseeinrichtung (5) ein elektrischer Aktuator (8) verbunden ist, und dass die Notlöseeinrichtung (5) zumindest ein zweites Kraftübertragungsglied (7) aufweist, das mit einem Handgriff (45) verbunden ist.

2. Feststellbremse nach Anspruch 1, **dadurch gekennzeichnet, dass** das erste Kraftübertragungsglied (6) lösbar mit dem elektrischen Aktuator (8) verbunden ist.

3. Feststellbremse nach Anspruch 1, **dadurch gekennzeichnet, dass** die Krafterzeugungseinheit (1) als pneumatischer Zylinder ausgeführt ist.

4. Feststellbremse nach Anspruch 1, **dadurch gekennzeichnet, dass** der elektrische Aktuator (8) als Hubmagnet ausgeführt ist.

5. Feststellbremse nach Anspruch 1, **dadurch gekennzeichnet, dass** das zweite Kraftübertragungsglied (7) lösbar mit dem Handgriff (45) verbunden ist.

6. Feststellbremse nach Anspruch 1, **dadurch gekennzeichnet, dass** zumindest das erste Kraftübertragungsglied (6) als Bowdenzug ausgeführt ist.

7. Feststellbremse nach Anspruch 1, **dadurch gekennzeichnet, dass** der elektrische Aktuator (8) für eine Ansteuerung einer Spannungsversorgungseinheit (48) zumindest eine Sende- und Empfangseinheit für Funkwellen aufweist.

8. Feststellbremse nach Anspruch 1, **dadurch gekennzeichnet, dass** der elektrische Aktuator (8) für eine Ansteuerung einer Spannungsversorgungseinheit (48) Anschlüsse für Signalleitungen aufweist.

## Claims

1. Parking brake for a chassis of a rail vehicle, wherein the parking brake comprises at least one power generation unit, at least one power transmission unit, at least one friction element, at least one friction partner and at least one emergency release device with at least one first force transmission element, **characterised in that** an electrical actuator (8) is connected at least with the first force transmission element (6) of the at least one emergency release device (5) and that the emergency release device (5) has at least one second force transmission element (7) which is connected to a handle (45).

2. Parking brake according to claim 1, **characterised in that** the first force transmission element (6) is connected detachably to the electrical actuator (8).

3. Parking brake according to claim 1, **characterised in that** the force generation unit (1) is embodied as a pneumatic cylinder.

4. Parking brake according to claim 1, **characterised in that** the electrical actuator (8) is embodied as a lifting magnet.

5. Parking brake according to claim 1, **characterised in that** the second force transmission element (7) is connected detachably with the handle (45).

6. Parking brake according to claim 1, **characterised in that** at least the first force transmission element (6) is embodied as a Bowden cable.

7. Parking brake according to claim 1, **characterised in that** the electrical actuator (8) has at least one transmit and receive unit for radio waves in order to actuate a voltage supply unit (48).

8. Parking brake according to claim 1, **characterised in that** the electrical actuator (8) has terminals for signal lines in order to actuate a voltage supply unit (48).

## Revendications

1. Frein de stationnement pour train de roulement d'un véhicule sur rails, le frein de stationnement comprenant au moins une unité de production de force, au moins une unité de multiplication de force, au moins un élément de friction, au moins un partenaire de friction ainsi qu'au moins un dispositif de desserrage d'urgence avec au moins un premier organe de transmission de force, **caractérisé en ce qu'**un actionneur électrique (8) est relié au moins au premier organe de transmission de force (6) de l'au moins un dispositif de desserrage d'urgence (5), et **en ce que** le dispositif de desserrage d'urgence (5) comprend au moins un second organe de transmission de force (7) qui est relié à une poignée (45).

2. Frein de stationnement selon la revendication 1, **caractérisé en ce que** le premier organe de transmission de force (6) est relié de manière détachable à l'actionneur électrique (8).

3. Frein de stationnement selon la revendication 1, **caractérisé en ce que** l'unité de production de force (1) est exécutée en tant que vérin pneumatique.

4. Frein de stationnement selon la revendication 1, **caractérisé en ce que** l'actionneur électrique (8) est exécuté en tant qu'électro-aimant de levage.

5. Frein de stationnement selon la revendication 1, **caractérisé en ce que** le second organe de transmission de force (7) est relié de manière détachable à la poignée (45) .

6. Frein de stationnement selon la revendication 1, **caractérisé en ce qu'**au moins le premier organe de transmission de force (6) est exécuté en tant que câble Bowden.

7. Frein de stationnement selon la revendication 1, **caractérisé en ce que** l'actionneur électrique (8) comprend au moins une unité d'émission-réception d'ondes radioélectriques pour une commande d'une unité d'alimentation en tension (48).

8. Frein de stationnement selon la revendication 1, **caractérisé en ce que** l'actionneur électrique (8) comprend des connexions pour câblages de signalisation pour une commande d'une unité d'alimentation en tension (48).
